# EUROPÄISCHE PATENTSCHRIFT

(11) **EP 0 528 210 B1**
(45) Veröffentlichungstag und Bekanntmachung des Hinweises auf die Patenterteilung: **03.04.1996**
(21) Anmeldenummer: 92112792.4
(22) Anmeldetag: 27.07.1992
(51) Int. Cl.: B01F 7/04

(54) **Vollständig selbstreinigender Reaktor/Mischer mit grossem Nutzvolumen**
Totally self-cleaning reactor/mixer with great utility volume
Réacteur-mélangeur complètement autonettoyant avec grand volume utile

(30) Priorität: 09.08.1991 DE 4126425
(43) Veröffentlichungstag der Anmeldung: 24.02.1993
(73) Patentinhaber: BAYER AG, D-51368 Leverkusen (DE)
(72) Erfinder: Schuchardt, Heinrich, Dipl.-Ing., W-5090 Leverkusen 1 (DE); Ullrich, Martin, Dipl.-Ing., W-5090 Leverkusen 1 (DE)

(56) Entgegenhaltungen:
- WO-A-88/04198
- DE-B- 1 199 737
- PATENT ABSTRACTS OF JAPAN vol. 11, no. 80 (C-409)(2527) 11. März 1987 & JP-A-61 234 917
- PATENT ABSTRACTS OF JAPAN vol. 13, no. 29 (C-562)(3377) 23. Januar 1989 & JP-A-63 232 828

## Beschreibung

Die Erfindung betrifft Scheibenreaktoren mit großem freien nutzbaren Volumen, die sich kinematisch selbst reinigen, bestehend aus zwei oder mehreren parallelen gegensinnig rotierenden Achsen, auf denen sich Zahnscheiben mit auf ihrem Umfang verteilten Abstreifern befinden, und einem umschließenden Gehäuse. Dabei sind die Zahnscheiben in hintereinander gestaffelten Ebenen senkrecht zu den Rotationsachsen so angeordnet, daß sie miteinander kämmen.

Die Erfindung richtet sich auf Vorrichtung zur verfahrenstechnischen Behandlung von Fluiden und kohäsiven Schüttgütern. Die Vorrichtungen sind vollständig kinematisch selbstreinigend und weisen ein großes freies Nutzvolumen auf.

Unter anderem bei der Erzeugung und Verarbeitung von Kunststoffen müssen hochviskose Flüssigkeiten verfahrenstechnisch behandelt werden. Insbesonders werden Apparate zum Mischen und Ausdampfen benötigt. Diese müssen eine gute Mischwirkung und im Falle der Ausdampfung auch eine schnelle Erneuerung der freien Oberflächen bewirken.

Produktablagerungen an den Wandungen solcher Mischer können zu Verfahrensbeeinträchtigungen führen. In den Ablagerungen werden unerwünschte Nebenreaktionen auf Grund der wesentlich verlängerten Verweilzeit begünstigt. Dies führt zur Verunreinigung des Produktes. Produktablagerungen an den Wandungen können durch kinematische Selbstreinigung des Mischers vermieden werden.

Das Ziel der Selbstreinigung erreichen z.B. bekannte gleich- und gegensinnige Zweiwellenextruder, ebenso einwellige Kneter mit axial oszillierender Bewegung. Ihren Bauformen gemein ist ein geringes freies, nutzbares Volumen. Nur ein kleiner Teil des Gesamtvolumens eines solchen Extruders steht für das Produkt zur Verfügung.

Im Hinblick auf die Minimierung der Apparatekosten ist aber ein großes freies Volumen anzustreben.

Ein großes freies Volumen wird von sogenannten Scheibenreaktoren erreicht. In der einwelligen Ausführung besteht der Rotor des Scheibenreaktors aus einer Welle auf der axial versetzt Scheiben angeordnet sind, die auf dem Umfang Abstreifelemente tragen, welche den größten Teil der Gehäusewandung abreinigen. Typischerweise sind an der Gehäusewandung stehende Abstreifer angeordnet, die die Welle und die Scheiben abreinigen sollen.

Den bekannten Ausführungen von Scheibenreaktoren gemein ist ein Abreinigungsgrad (kinematisch abgereinigte Fläche/gesamte produktberührte Oberfläche des Apparates) von in der Regel kleiner 70 %. Dies beruht darauf, daß im einwelligen Fall die Abstreifelemente nicht allseitig abgereinigt werden und im zweiwelligen Fall auch die Scheiben nur in beschränktem Maße gereinigt werden.

Ein Fortschritt wurde durch den in der deutschen Patentanmeldung mit dem Aktenzeichen P 4 018 069.7 beschriebenen Reaktor erzielt. Hier wurde der Abreinigungsgrad wesentlich erhöht. Da jedoch in dem dort beschriebenen Reaktor die Scheiben versetzt angeordnet sind, verbleibt auf der gegenüberliegenden Gehäusewandung ein ungereinigter Streifen. Auch ist die axiale Durchlässigkeit, die vor allem für Ausdampfprozesse erforderlich ist, gering.

Ziel der Erfindung ist die Schaffung eines Reaktors der vollständig selbstreinigend ist und ein hohes freies Volumen aufweist.

Die Aufgabe wird dadurch gelöst, daß ein mehrwelliger Mischer in axial gestaffelten Ebenen jeweils auf jeder Welle miteinander im Eingriff befindliche Zahnscheiben trägt, welche wiederum Abstreifer tragen. Dabei sind die Zahnscheiben so gestaltet, daß sie einander auf ihrer Umfangsfläche und das Gehäuse in ihrem Bereich abreinigen. Die Abstreifer reinigen einander am Umfang und das Gehäuse ab. Zudem reinigen sich die Stirnflächen von Abstreifern und Zahnscheiben gegenseitig. Die Gehäusestimflächen werden von Zahnscheiben gereinigt.

Eine Anordnung von Abstreifelementen, die einander am Umfang vollständig abreinigen ist in der Patentanmeldung (P 4 018 069.7) beschrieben. Diese wurde jedoch nur für Scheibenreaktoren herangezogen, die axial versetzte Scheiben tragen.

Von gegensinnig rotierenden Systemen ist bekannt, daß im Radialschnitt ein Punkt eines Rotors eine Zykloidenkurve im Bezugssystem des anderen Rotors beschreibt.

Daraus ergibt sich, daß ein Abstreifelement eines Scheibenreaktor genauso wie eine Zahnscheibe genau dann komplett kinematisch abgereinigt wird, wenn der jeweilige Umfang durch die Zykloidenkurven beschränkt wird, die die Umfangspunkte der Abstreifelemente/der Zahnscheibe des anderen Rotors beschreiben.

Entsprechend der Form der Zykloidenkurven sind alle nach außen zeigenden Flächen konvex, während die Flächen mit einem Normalenanteil zur Rotationsachse konkav sind.

Eine geeignete Anordnung der Abstreifelemente gelingt, wenn alle Abstreifelemente so angeordnet sind, daß ihre Hauptausdehnung mit dem Radius einen Winkel einschließt, und in einem Radialschnitt alle Abstreifelemente eines Rotors nach außen fördern und alle des anderen Rotors nach innen.

Dadurch wird es möglich, daß beim Eintritt in den Eingriffsbereich des anderen Rotors die Schmalseiten eines Abstreifelementes die Längsseiten zweier Abstreifelemente des anderen Rotors abreinigen, während beim Austritt die Längsseiten eines Abstreifelementes des einen Rotors die Schmalseiten zweier Abstreifelemente des anderen Rotors abreinigen. Die Spitzen der Abstreifer reinigen die gegenüberliegende Welle und den Gehäuseumfang.

Wenn nun auf einem Rotor nur nach außen fördernde Elemente und auf dem anderen Rotor nur nach innen fördernde Elemente angeordnet wären, wäre zu erwarten, daß das Torsionsmoment und damit auch der Torsionswinkel der Wellen über ihre axiale Ausdehnung unterschiedlich wäre und somit über die Länge wechselnde Spiele bis hin zum Klemmen auftreten könnten.

Dies kann verhindert werden, indem auf einer Welle einander in axialer Richtung nach außen und nach innen fördernde Elemente abwechseln.

Weitgegend selbstreinigende Zahnscheiben sind zum Beispiel die weitverbreiteten evolventenverzahnten Zahnräder. Diese weisen jedoch auf ihren Flanken einen Totpunkt auf. Wenn sich die beiden einander reinigenden Zähne hier berühren, ist keine Relativgeschwindigkeit vorhanden. Folglich erfolgt am Totpunkt keine Selbstreinigung. Vielmehr sammelt sich wandnahes Produkt in der Nähe des Totpunktes.

Eine Lösung ist erreichbar durch starke Hinterschneidung am Zahnfuß schon oberhalb des Totpunktes. Dabei reinigt dann die Zahnspitze den Zahnzwischenraum. Die seitlichen Ecken der Zähne des einen Rotors reinigen die sonstigen Oberflächen des im Eingriff befindlichen Rotors.

Eine Befestigung der Abstreifelemente an den Zähnscheiben wird dadurch ermöglicht, daß in einem Radialschnitt jeder zweite Abstreifer mit den Zähnen der vor der Schnittebene liegenden Zahnscheiben verbunden sind. Die dazwischen liegenden Abstreifer sind mit den Zähnen der hinter der Schnittebene liegenden Zahnscheibe verbunden.

Eine axiale Förderung kann dadurch erreicht werden, daß die Abstreifer oder die Zahnscheiben oder beide in ihrer axialen Ausdehnung spiralförmig verdreht ausgeführt werden.

Eine bessere Durchmischung läßt sich durch zusätzliche Abstreifer auf Kleinerem Radius als dem Außendurchmesser erreichen.

Gegenstand der Erfindung ist also ein Scheibenreaktor bestehend aus zwei oder mehreren gegensinnig rotierenden parallelen Achsen, auf denen sich axial gestaffelt mit einander im Eingriff befindliche Zahnscheiben mit auf ihrem Umfang verteilten Abstreifelementen befinden und einem umschließenden Gehäuse
bei dem in einem Radialschnitt die begrenzenden Flächen eines Abstreifers durch Abstreifer eines im Eingriff befindlichen Rotors oder durch das Gehäuse berührt werden,
bei dem im Radialschnitt die Hauptausdehnung der Abstreifelemente einen Winkel mit dem Radius einschließt,
bei dem in einem Radialschnitt alle Abstreifer eines Rotors nach außen fördern, während die Abstreifer eines im Eingriff befindlichen gegenläufigen Rotors alle nach innen fördern,
bei dem in einem Radialschnitt alle begrenzenden Flächen eines Abstreifers, deren Normalenvektor eine Komponente weg von der Rotationsachse hat, konvex sind, während alle Flächen eines Abstreifers, deren Normalenvektor eine Komponente hin zur Rotationsachse hat, konkav sind,
bei dem in einem Radialschnitt jeder zweite Abstreifer mit der vor der Schnittebene liegenden Zahnscheibe verbunden ist und die restlichen Abstreifer mit der nach der Schnittebene liegenden Zahnscheibe.

Eine bevorzugte Ausführungsform des Scheibenreaktors ist dadurch gekennzeichnet,
daß die Zähne im Zahnfuß hinterschnitten sind,
daß die Zahnspitzen den Zahnfuß der im Eingriff befindlichen Scheibe berühren während die seitlichen Ecken der Zähne die sonstigen im Eingriff befindlichen Zahnflächen berühren,
daß sich die Zahnspitzen und die Gehäusewandung gegenseitig berühren.

Unter Berühren wird die kleinstmögliche Annäherung der genannten Teile des Reaktors verstanden, die bei Berücksichtigung der Fertigungstoleranzen erreicht werden kann, so daß die genannten Teile ohne Blockierung der Rotation der Achsen aneinander vorbei gleiten können.

Bevorzugt ist eine Ausführungsform des Scheibenreaktors mit n-fach rotationssymmetrischen Rotoren.

Ein großes freies Volumen erfordert, daß der Achsdurchmesser der Rotoren klein gegenüber dem Außendurchmesser ist. Bei rotationssymmetrischen Rotoren ist ein Außenradius größer 3/4 des Achsabstandes möglich bei
- betragsmäßig gleichschneller Rotation und 2 bis 8 Zähnen je Zahnscheibe,
- einem Drehzählverhältnis von 2 zu 3 mit 3 Zähnen auf den Zahnscheiben der langsamer rotierenden Rotoren und 2 Zähnen auf den Zähnscheiben der schneller rotierenden Rotoren,
- einem Drehzahlverhältnis von 3 zu 4 mit 4 Zähnen auf den Zahnscheiben der langsamer rotierenden Rotoren und 3 Zähnen auf den Zahnscheiben der schneller rotierenden Rotoren.

In einer besonderen Ausführungsform kann eine Förderung entlang der Achsen des Reaktors dadurch erreicht werden, daß die Abstreifer oder die Zahnscheiben oder beide in ihrer axialen Ausdehung spiralförmig um die Rotorachse verdreht ausgeführt werden.

In einer bevorzugten Ausführungsform des Scheibenreaktors wechseln sich auf einem Rotor nach außen und nach innen fördernde Abstreifer in axialer Richtung ab.

Die Abstreifelemente können auf den Scheiben in axialer Richtung betrachtet um einen Winkel versetzt angeordnet sein um eine Vergleichmäßigung der Antriebsdrehmomente zu erreichen.

Nachstehend wird die Beschreibung der Erfindung anhand der beigefügten Zeichnungen näher erläutert.

### Es zeigen:

Fig. 1: Darstellung eines Abschnittes eines erfindungsgemäßen Scheibenreaktors bei dem alle Abstreifer eines Rotors gleich fördern.
Fig. 2: Darstellung eines Abschnittes eines erfindungsgemäßen Scheibenreaktors bei dem axial aufeinander folgende Abstreifer eines Rotors verschieden fördern.
Fig. 3: Radialschnitt durch die Abstreifelemente der Scheibenreaktoren aus Fig. 1 und Fig. 2.
Fig. 4: Relativbewegung eines Abstreifers des einen Rotors eines Scheibenreaktors wie in Fig. 1 und Fig. 2 bezüglich des anderen Rotors in Momentaufnahmen.

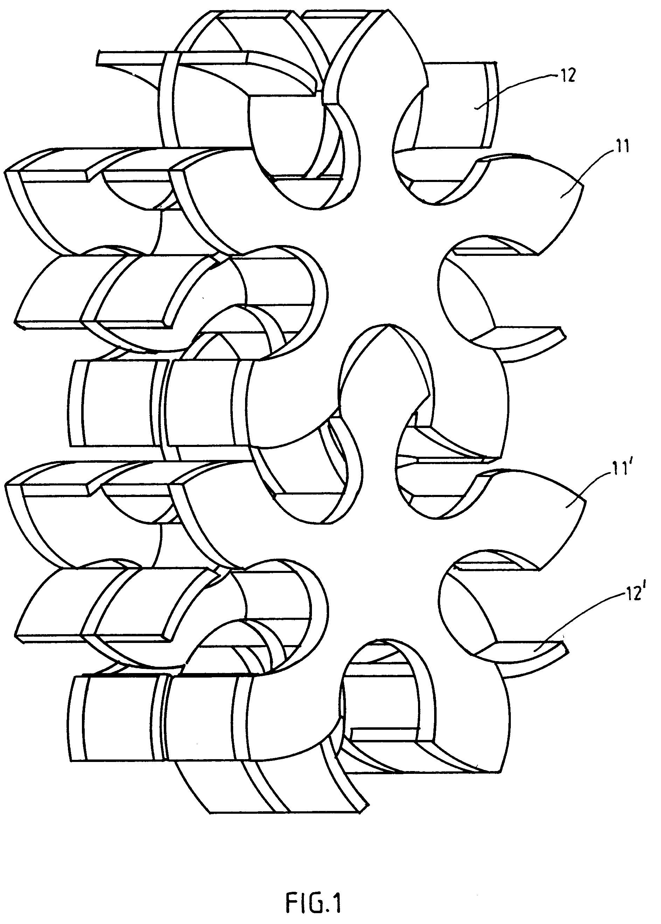

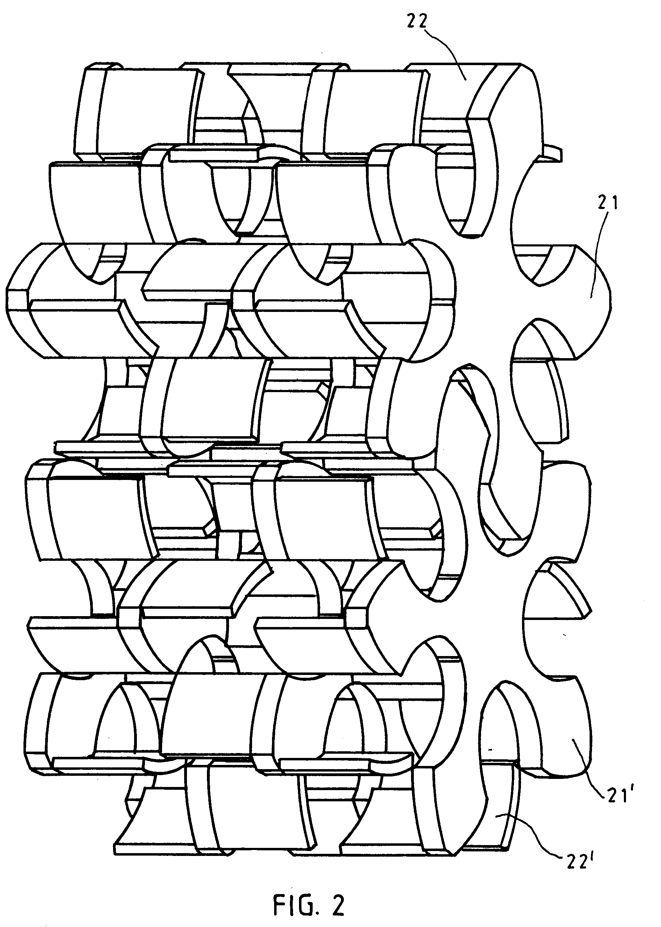

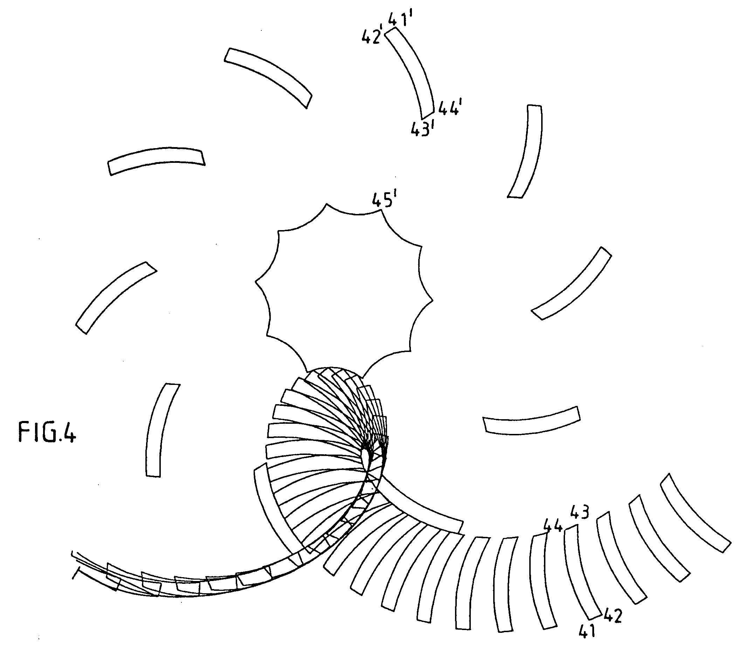

Fig. 4: Relativbewegung aller Abstreifer eines Rotors bezüglich des anderen Rotors eines Scheibenreaktors wie in Fig. 1 und Fig. 2 in Momentaufnahmen.

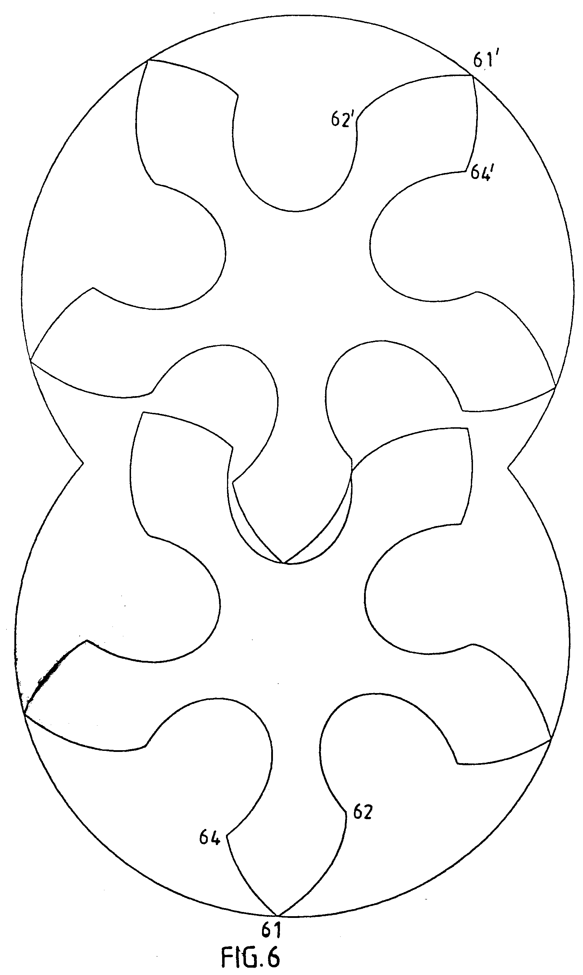

Fig. 6: Radialschnitt durch die Zahnscheiben des Scheibenreaktors nach Fig. 1.

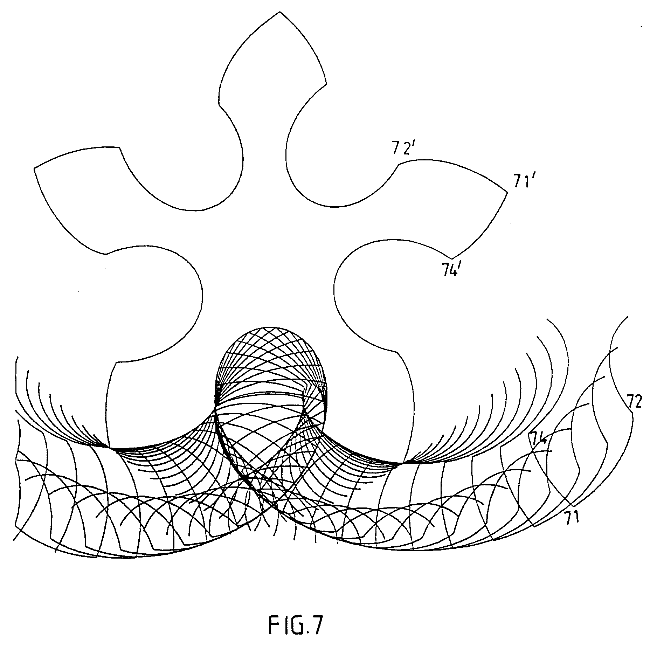

Fig. 7: Relativbewegung eines Zähnes einer Zähnscheibe des Scheibenreaktors nach Fig. 1 bezüglich des anderen Rotors in Momentaufnahmen.

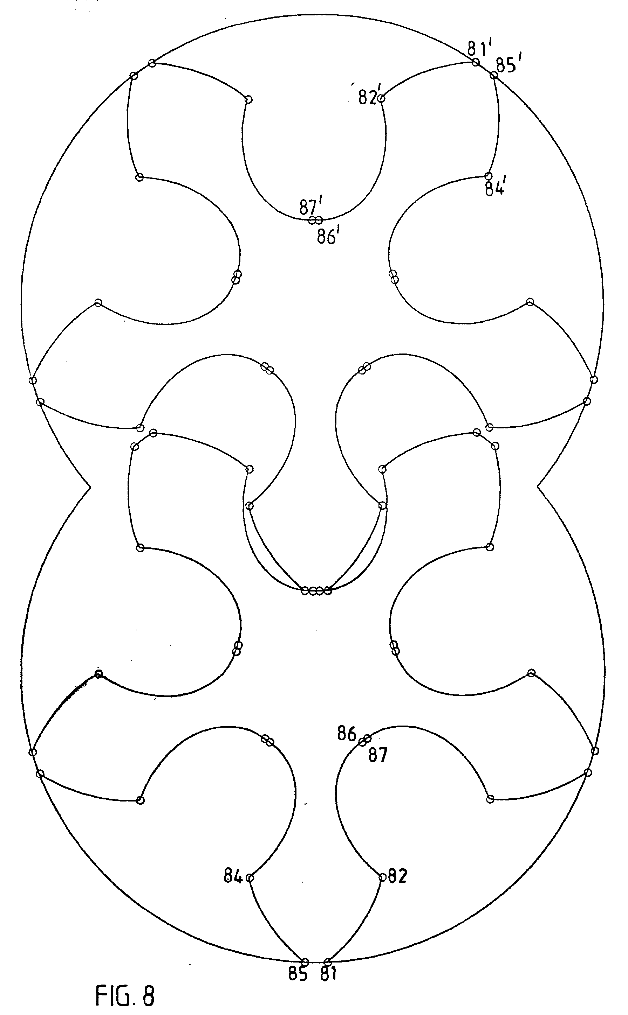

Fig.8: Radialschnitt durch die Zahnscheiben des Scheibenreaktors nach Fig. 2.

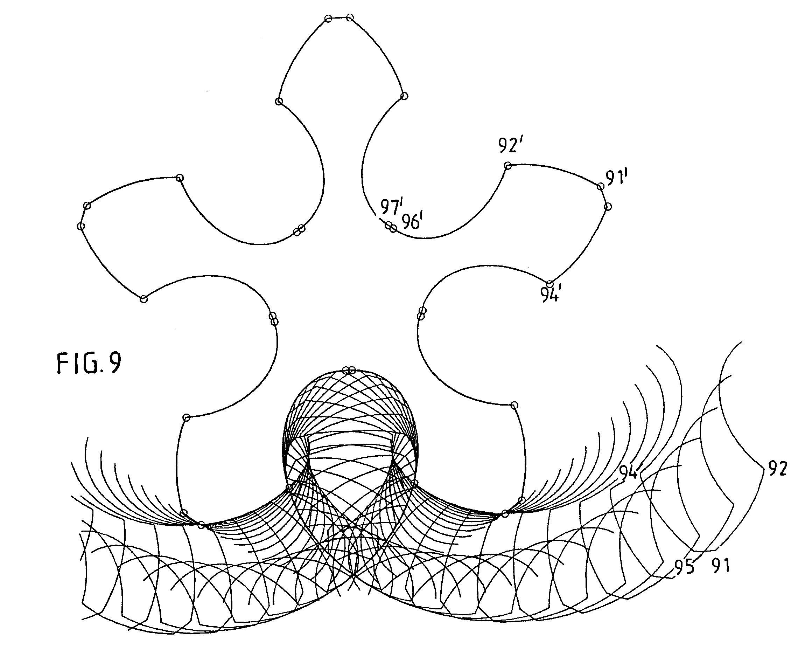

Fig. 9: Relativbewegung eines Zahnes einer Zähnscheibe des Scheibenreaktors nach Fig. 2 bezüglich des anderen Rotors in Momentaufnahmen.

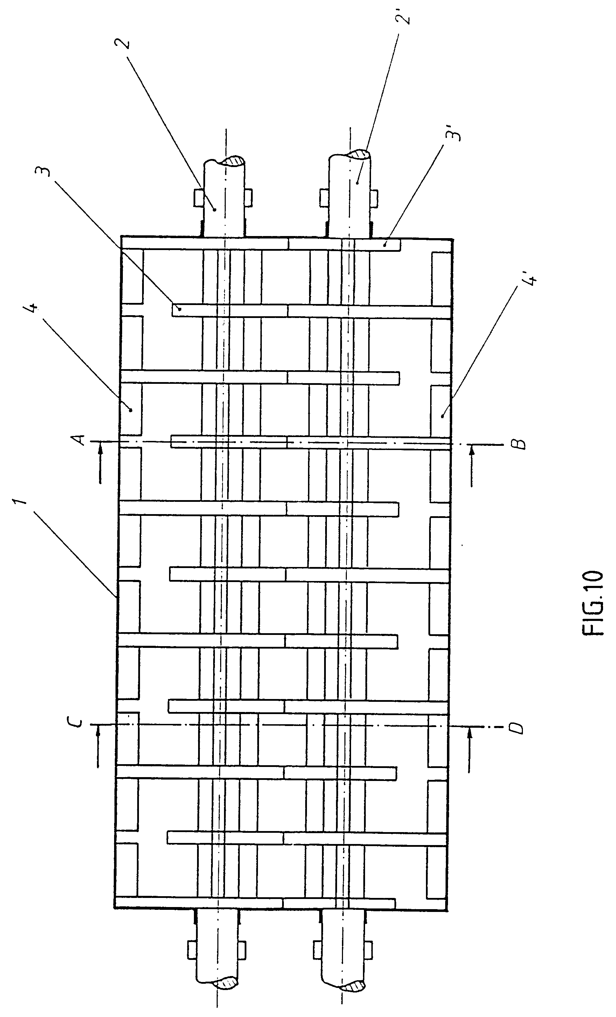

Fig. 10: Prinzipieller Aufbau eines erfindungsgemäßen Scheibenreaktors.

### Beispiele

In Fig. 10 ist der Grundaufbau eines mehrwelligen Seheibenrealktor gezeigt.

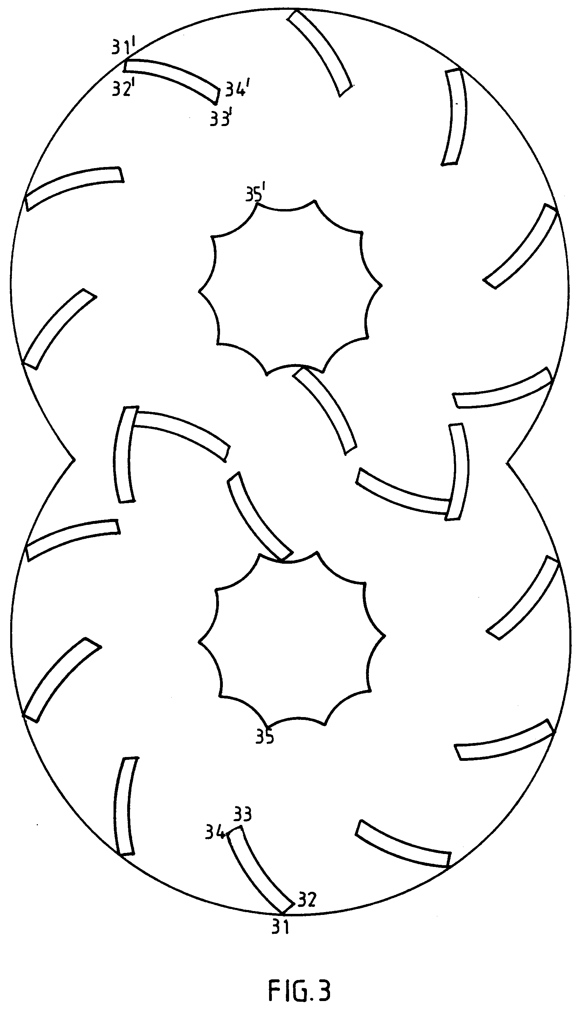

Für das Verständnis der Kinematik sind Radialschnitte durch die Abstreifelemente 4 und 4'bzw. durch die Zahnscheiben 3 und 3' ausschlaggebend. Dementsprechend sind in den Figuren 6-9 jeweils Schnitte entsprechend dem Schnitt A-B und in den Figuren 3-5 jeweils solche entsprechend dem Schnitt C-D aus Fig. 10 dargestellt.

### Beispiel 1

In Figur 1 wird der Aufbau eines Abschnittes eines erfindungsgemäßen Scheibenreaktors gezeigt, bei dem alle Abstreifer 12' eines Rotors nach außen und alle Abstreifer 12 des anderen Rotors nach innen fördern.

Zur Vergleichmaßigung der Drehmomente sind die Rotoren rotationssymmetrisch aufgebaut. Eine Minimierung der Antriebsmomente wird durch möglichst schmale Abstreifelemente erreicht.

Figur 6 zeigt einen Schnitt durch die Zähnscheiben 11,11' des Reaktors aus Figur 1.

Die Reinigung der Flächen 62-61 erfolgt durch die Zahnkanten 62', die Reinigung der Flächen 62-64 durch die Zahnspitzen 61' und die Reinigung der Flächen 64-61 durch die Zähnkanten 64'. Ebenso werden die Flächen 62'-61' durch die Zahnkanten 62, die Flächen 62'-64' durch die Zahnspitzen 61 und die Flächen 64'-61' durch die Zahnspitzen 61 gereinigt. Die Reinigung der Gehäusewandung erfolgt durch die Zähnspitzen 61 und 61'.

Figur 7 zeigt die Relativbewegung eines Zahnes 71-72-74 bezüglich des anderen Rotors in Momentaufnahmen während einer halben Umdrehung.

### Beispiel 2

In Figur 2 wird der Aufbau eines Abschnittes eines erfindungsgemäßen Scheibenreaktors gezeigt, bei dem sich in axialer Richtung auf einem Rotor nach außen und nach innen fördernde Abstreifer abwechseln. Hierdurch wird erreicht, daß das Torsionsmoment in beiden Wellen gleich ist und folglich keine wechselnden Spiele über die axiale Ausdehnung auftreten.

Zur Vergleichmäßigung der Drehmomente sind die Rotoren rotationssymmetrisch aufgebaut. Eine Minimierung der Antriebsmomente wird durch möglichst schmale Abstreifelemente erreicht.

Figur 8 zeigt einen Schnitt durch die Zähnscheiben 21, 21' des Reaktors aus Figur 2.

Die Reinigung der Flächen 81-82 erfolgt durch die Kanten 82', die der Flächen 84, 87 durch die Kante 85', die der Flächen 82-86 durch die Kanten 81', die der Flächen 86-87 durch die Flächen 81'-85', die der Flächen 84-85 durch die Kanten 84'. Die Flächen 81-85,81'-85' reinigen sich mit dem Gehäuse gegenseitig.

Figur 9 zeigt die Relativbewegung eines Zahnes 92-91-95-94 bezüglich des anderen Rotors in Momentaufnähmen während einer halben Umdrehung.

Figur 3 zeigt einen Schnitt durch die Abstreifelemente 12, 12' des Reaktors aus Figur 1, beziehungsweise 22, 22' aus Figur 2.

Die Reinigung der Flächen 31-32 erfolgt durch die Kanten 32', die der Flächen 32-33, 33-34 und 35-35 durch die Kanten 31', die der Flächen 34-31 durch die Kanten 34'. Die Kanten 31, 31' reinigen die Gehäusewandung.

Figur 4 zeigt die Relativbewegung eines Abstreifers 41-42-43-44 bezüglich des anderen Rotors in Momentaufnahmen während einer halben Umdrehung.

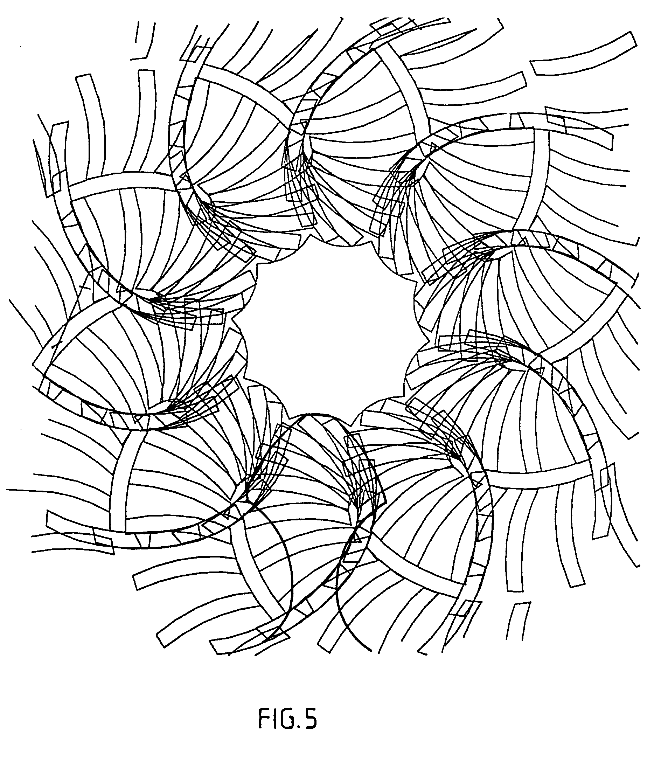

Figur 5 zeigt die Relativbewegung aller Abstreifer eines Rotors bezüglich des anderen Rotors. Es wird ersichtlich, daß die Abreinigung der Stirnflächen der Zahnscheiben 11, 11' aus Figur 1 bzw. 21, 21' aus Figur 2 vollständig erfolgt.

## Patentansprüche

1. Scheibenreaktor bestehend aus zwei oder mehr parallelen gegensinnig rotierenden Achsen (2, 2'), auf denen sich in axial gestaffelten Ebenen senkrecht zu den Rotationsachsen miteinander im Eingriff befindliche Zahnscheiben (3, 3') mit auf ihrem Umfang verteilten Abstreifelementen (4, 4') befinden und einem umschließenden Gehäuse (1),
bei dem in einem Radialschnitt alle begrenzenden Flächen eines Abstreifers (4) durch Abstreifer (4') eines im Eingriff befindlichen Rotors (2') oder durch das umschließende Gehäuse (1) berührt werden, bei dem in einem Radialschnitt die Hauptausdehnung der Abstreifelemente einen Winkel mit dem Radius einschließt,
bei dem in einem Radialschnitt alle Abstreifer (4) eines Rotors (2) nach außen fördern, während die Abstreifer (4') eines im Eingriff befindlichen gegenläufigen Rotors (2') alle nach innen fördern,
bei dem alle begrenzenden Flächen eines Abstreifers (4) bzw. (4'), deren Normalenvektor in einem Radialschnitt eine Komponente weg von der Rotationsachse hat, konvex sind, während alle Flächen eines Abstreifers, deren Normalenvektor eine Komponente hin zur Rotationsachse hat, konkav sind,
bei dem jeder zweite Abstreifer (4) bzw. (4') in einem Radialschnitt mit der vor der Schnittebene liegenden Zahnscheibe verbunden ist und die restlichen Abstreifer mit der nach der Schnittebene liegenden Zahnscheibe
und bei dem in einem Radialschnitt alle begrenzenden Flächen einer Zahnscheibe (3) bzw. (3') durch die im Eingriff befindlichen Zahnscheiben oder durch das Gehäuse (1) berührt werden.

2. Vorrichtung nach Anspruch 1. dadurch gekennzeichnet, daß in einem Radialschnitt die Zähne (11) bzw. (11') einer Zahnscheibe im Zahnfluß, mindestens im Bereich innerhalb des Teilkreisdurchmessers, hinterschnitten sind,
daß die Zahnspitzen den Zahnfuß der im Eingriff befindlichen Zahnscheibe berühren,
daß sich Zahnspitzen und Gehäusewand gegenseitig berühren,
daß die seitlichen Ecken der Zähne die sonstigen im Eingriff befindlichen Zahnflächen berühren.

3. Vorrichtung nach einem der Ansprüche 1 oder 2 dadurch gekennzeichnet,
daß auf einem Rotor (2) nach außen und nach innen fördernde Abstreifer sich in axialer Richtung abwechseln.

4. Vorrichtung nach einem der Ansprüche 1 bis 3 dadurch gekennzeichnet,
daß die Rotoren (2) n-fach rotationssymmetrisch sind.

5. Vorrichtung nach einem der Ansprüche 1 bis 4, dadurch gekennzeichnet, daß die Beträge der Winkelgeschwindigkeit zweier Rotoren (2, 2') sich wie 2 zu 3 verhalten und die jeweiligen Zahnscheiben (3, 3') 3 bzw. 2 Zähne haben.

6. Vorrichtung gemäß einem der Ansprüche 1 bis 4, dadurch gekennzeichnet, daß die Beträge der Winkelgeschwindigkeiten zweier Rotoren (2,2') sich wie 3 zu 4 verhalten und die jeweiligen Zahnscheiben (3, 3') 4 bzw. 3. Zähne haben.

7. Vorrichtung nach einem der Ansprüche 1 bis 4 dadurch gekennzeichnet,
daß die Rotoren (2, 2') mit betragsmäßig gleicher Winkelgeschwindigkeit rotieren, und
daß die Zahnscheiben (3, 3') 2 bis 8 Zähne tragen.

8. Vorrichtung gemäß Anspruch 7, dadurch gekennzeichnet, daß die Zahnscheiben (3, 3') 3 bis 5 Zähne tragen.

9. Vorrichtung nach einem der Ansprüche 1 bis 8 dadurch gekennzeichnet,
daß die Abstreifer (4) bzw. (4') oder die Zahnscheiben (3) bzw. (3') oder beide in ihrer axialen Ausdehnung spiralförmig um die Rotorachse verdreht ausgeführt sind.

10. Vorrichtung nach einem der Ansprüche 1 bis 9 dadurch gekennzeichnet, daß die Abstreifelemente (4) bzw. (4') auf den Scheiben in axialer Richtung betrachtet um einen Winkel versetzt angeordnet sind.

## Claims

1. Disc reactor consisting of two or more parallel counterrotating shafts (2, 2'), on which toothed discs (3, 3'), which are engaged with one another and have scraping members (4, 4') distributed over their circumference, are disposed perpendicularly to the axes of rotation in axially echeloned planes, and a surrounding housing (1),
wherein in a radial section all the limiting areas of a scraper (4) are contacted by scrapers (4') of an engaged rotor (2') or by the surrounding housing (1), and the major extent of the scraping members forms an angle with the radius,
wherein in a radial section all the scrapers (4) of one rotor (2) convey outwards, while the scrapers (4') of an engaged, contrarotating rotor (2') all convey inwards,
wherein all the limiting areas of a scraper (4) or (4') whose normal vector has a component pointing away from the axis of rotation in a radial section are convex, while all the areas of a scraper whose normal vector has a component pointing towards the axis of rotation are concave,
wherein each second scraper (4) or (4') is connected to the toothed disc lying before the sectional plane in a radial section and the remaining scrapers are connected to the toothed disc lying after the sectional plane,
and wherein in a radial section all the limiting areas of a toothed disc (3) or (3') are contacted by the engaged toothed discs or by the housing (1).

2. Device according to claim 1, characterised in that in a radial section the teeth (11) or (11') of a toothed disc are undercut in the tooth root, at least in the region inside the pitch diameter,
that the tooth tips contact the tooth root of the engaged toothed disc,
that the tooth tips and the housing wall contact one another,
and that the lateral corners of the teeth contact the other engaged tooth areas.

3. Device according to one of claims 1 and 2, characterised in that outwardly and inwardly conveying scrapers alternate in the axial direction on a rotor (2).

4. Device according to one of claims 1 to 3, characterised in that the rotors (2) are rotationally symmetrical n times.

5. Device according to one of claims 1 to 4, characterised in that the rates of the angular velocity of two rotors (2, 2') are in a ratio of 2 to 3 and each toothed disc (3, 3') has 3 or 2 teeth.

6. Device according to one of claims 1 to 4, characterised in that the rates of the angular velocities of two rotors (2, 2') are in a ratio of 3 to 4 and each toothed disc (3, 3') has 4 or 3 teeth.

7. Device according to one of claims 1 to 4, characterised in that the rotors (2, 2') rotate at the same angular velocity,
and that the toothed discs (3, 3') have between 2 and 8 teeth.

8. Device according to claim 7, characterised in that the toothed discs (3, 3') have between 3 and 5 teeth.

9. Device according to one of claims 1 to 8, characterised in that the scrapers (4) or (4') or the toothed discs (3) or (3') or both are spirally twisted about the rotor axis in their axial extent.

10. Device according to one of claims 1 to 9, characterised in that the scraping members (4) or (4') are angularly staggered on the discs, when viewed in the axial direction.

## Revendications

1. Réacteur à plateaux, constitué de deux ou plusieurs axes parallèles (2, 2') tournant en sens opposés sur lesquels des plateaux dentés (3, 3') s'engrenant l'un avec l'autre sont situés dans des plans empilés axialement et perpendiculaires aux axes de rotation, et comportant des éléments de raclage (4, 4') distribués à leur périphérie, et d'un boîtier périphérique (1),
dans lequel, dans une coupe radiale, toutes les surfaces frontières d'un racloir (4) sont touchées par des racloirs (4') d'un rotor (2') qui s'engrène, ou par le caisson périphérique (1), et dans lequel, dans une coupe radiale, l'extension principale des éléments de raclage forme un angle avec le rayon,
dans lequel, dans une coupe radiale, tous les racloirs (4) d'un rotor (2) assurent un transport vers l'extérieur, tandis que les racloirs (4') d'un rotor (2') tournant en sens inverse et s'engrenant sur le premier assurent tous un transport vers l'intérieur,
dans lequel, dans une coupe radiale, toutes les surfaces frontières d'un racloir (4) ou (4') dont le vecteur normal présente une composante s'éloignant de l'axe de rotation sont convexes, tandis que toutes les surfaces d'un racloir dont le vecteur normal présente une composante dirigée vers l'axe de rotation sont concaves,
dans lequel, dans une coupe radiale, un racloir (4) ou (4') sur deux est relié aux plateaux dentés situés en avant du plan de la coupe, et les autres racloirs sont liés aux plateaux dentés situés derrière le plan de la coupe,
et dans lequel, dans une coupe radiale, toutes les surfaces frontières d'un plateau denté (3) ou (3') sont touchées par les plateaux dentés qui s'engrènent avec lui ou par le caisson (1).

2. Dispositif selon la revendication 1, caractérisé en ce que dans une coupe radiale, les dents (11) ou (11') d'un plateau denté présentent une contre-dépouille dans le pied de la dent, au moins dans la région située à l'intérieur du diamètre du cercle partiel,
en ce que les pointes des dents touchent les pieds des dents des plateaux dentés qui s'engrènent,
en ce que les pointes des dents et la paroi du caisson se touchent mutuellement,
en ce que les bords latéraux des dents touchent les autres surfaces de dent qui s'engrènent.

3. Dispositif selon l'une des revendications 1 ou 2, caractérisé en ce que sur un rotor (2), des racloirs assurant un transport vers l'extérieur et des racloirs assurant un transport vers l'intérieur sont alternés dans la direction axiale.

4. Dispositif selon l'une des revendications 1 à 3, caractérisé en ce que les rotors (2) présentent une symétrie de rotation d'ordre n.

5. Dispositif selon l'une des revendications 1 à 4, caractérisé en ce que les valeurs des vitesses angulaires de deux rotors (2, 2') sont dans un rapport de 2 à 3, et les plateaux dentés correspondant (3, 3') présentent respectivement 3 et 2 dents.

6. Dispositif selon l'une des revendications 1 à 4, caractérisé en ce que les valeurs des vitesses angulaires de deux rotors (2, 2') sont dans un rapport de 3 à 4, et les plateaux dentés correspondants (3, 3') présentent respectivement 4 et 3 dents.

7. Dispositif selon l'une des revendications 1 à 4, caractérisé en ce que les rotors (2, 2') tournent à même vitesse angulaire, et en ce que les disques dentés (3, 3') portent 2 à 8 dents.

8. Dispositif selon la revendication 7, caractérisé en ce que les disques dentés (3, 3') portent 3 à 5 dents.

9. Dispositif selon l'une des revendications 1 à 8, caractérisé en ce que les racloirs (4) ou (4'), ou les disques dentés (3) ou (3'), ou les deux, sont réalisés avec leur extension axiale tordue en forme de spirale autour de l'axe de rotation.

10. Dispositif selon l'une des revendications 1 à 9, caractérisé en ce que vus dans la direction axiale, les éléments de raclage (4) et (4') sont disposés sur les plateaux avec un décalage angulaire.
